(19) Europäisches Patentamt
European Patent Office
Office européen des brevets

(11) Publication number: **0 218 938 B1**

# (12) EUROPEAN PATENT SPECIFICATION

(45) Date of publication of patent specification: **08.09.93**

(51) Int. Cl.5: **G02F 1/35**, G02F 1/37, G02F 1/29, G02F 1/01

(21) Application number: **86112794.2**

(22) Date of filing: **16.09.86**

## (54) Nonlinear optical materials and devices.

(30) Priority: **16.09.85 US 776336**

(43) Date of publication of application: **22.04.87 Bulletin 87/17**

(45) Publication of the grant of the patent: **08.09.93 Bulletin 93/36**

(84) Designated Contracting States: **DE FR GB NL SE**

(56) References cited:
**EP-A- 0 214 828**

**ANGEWANDTE CHEMIE. INTERNATIONAL EDITION, vol. 23, 1984, pages 690-703, Verlag Chemie GmbH, Weinheim, DE; D.J. WILLIAMS: "Organic polymeric and non-polymeric materials with large optical nonlinearities"**

(73) Proprietor: **AMERICAN TELEPHONE AND TELEGRAPH COMPANY**
**550 Madison Avenue**
**New York, NY 10022(US)**

(72) Inventor: **Lalama, Salvatore Joseph**
**62 Burlington Road**
**Clifton New Jersey 07012(US)**
Inventor: **Singer, Kenneth David**
**1889 Lambert Road**
**Jenkintown Pennsylvania, 19046(US)**
Inventor: **Sohn, John Edwin**
**5 Holly Oak Court**
**Voorhees New Jersey, 08043(US)**

(74) Representative: **Blumbach Weser Bergen Kramer Zwirner Hoffmann Patentanwälte**
**Radeckestrasse 43**
**D-81245 München (DE)**

EP 0 218 938 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Technical Field

This invention relates to nonlinear optical elements comprising the features of the preamble of claim 1 and to nonlinear optical devices such as electrooptic modulators and switches, frequency converters and data processors and optically nonlinear materials useful in such devices.

### Background of the Invention

Electrooptical modulators, switches and optical parametric devices based upon the nonlinear optical properties of materials are known in the art. Generally, these devices have utilized inorganic crystals, e.g., $LiNbO_3$ as the optically nonlinear media. More recently, organic crystalline materials, e.g., 2-methyl-4-nitroanaline, have been shown to have a figure of merit as an optically nonlinear active material which is greater than that of $LiNbO_3$. In addition, due to the electronic states associated with the effect, the organic crystalline materials not only have large intrinsic second order nonlinear optical susceptabilities, but potentially possess very fast switching times. Further, associated with such second order nonlinear optical effect is a linear electrooptical effect.

One problem, however, in obtaining an optically nonlinear medium for device application of the type previously described is the difficulty in providing uniform crystalline structures, and thin films of such materials in a manner to be suitable for integrated devices. We have now developed electrooptic and optical parametric devices and optically nonlinear media used therein which do not use or require crystalline structures. ANGEWANDTE CHEMIE. INTERNATIONAL EDITION, vol. 23, 1984, p. 690-703, Verlag Chemie GmbH, Weinheim, DE; D.J. Williams "Organic polymeric and non-polymeric materials with large nonlinearities" discloses films consisting of a thermotropic nematic liquid crystalline coplolymer doped with pleochroic dye, which are subjected to a transverse electrical field and their linear and second non-linear optical properties are examined. Orthoscopic examination of the films established the nematic texture of the doped polymer and the ability to achieve dc field induced homogenous alignment. From linear dichroism measurements in the films an order parameter of 0.3 was obtained. Second harmonic generation measurements relative to quartz were made to establish the value of second-order nonlinear susceptibility and to probe the nature of the dc field induced alignment. Poling the films below $T_g$ leads to a second-order susceptibility of about $3 * 10^{-9}$ esu. Second harmonic generation measurements were made under various conditions.

It is described in this document to use a nematic liquid crystal copolymer doped with a pleochroic dye. However, this material is not glassy and has a definite ordering with the nematic phase.

Throughout the following description the term "glassy" in connection with polymer is meant in its commonly understood and generally used sense to designate an amorphous structure without long range three-dimensional order.

### Summary of the Invention

A nonlinear optical element comprises an optically clear polymer host and organic dopant molecules having a nonzero second order optical susceptibility, being incorporated and directionally aligned in said polymer host; and said polymer host is a glassy polymer.

Further, an optical device comprises the aforementioned nonlinear optical element and means for providing an optical input to and an output from said element. When said device is employed in an electrooptic mode it includes means for applying an electric field and/or optical input to said element for altering an optical property thereof.

### Brief Description of the Drawings

FIG. 1 is an elevational partially cross-sectional view of an electrooptical directional coupler or switch,
FIG. 2 is an elevational view of an integrated solid state laser tuner and frequency stabilizer,
FIG. 3 is a diagrammatic representation of a device for generating second harmonic frequencies,
FIG. 4 is a diagrammatic representation of an electrooptic phase/intensity modulator; and
FIG. 5 is an elevational view of an electrooptical guided wave intensity modulator.

Detailed Description

The heart of any optically nonlinear device is the nonlinear optical medium employed therein. We have found that in order to take advantage of large microscopic susceptabilities of many non-centrosymmetrical organic molecules in macroscopic devices, one may construct a noncrystalline medium comprising a non-centrosymmetric organic molecule having a non-zero second order optical susceptability incorporated in an optically clear glassy polymer in an ordered or directionally aligned arrangement of the organic molecules. Such second order nonlinear optical media can be prepared directly on a desired substrate or can be made as a free film or tape. It may be noted that this optically nonlinear media can be utilized as an optical waveguide as well as in electrooptic devices.

Generally, in electrooptic devices, here is electrical control of the direction, phase, frequency and/or amplitude of lightwave signals. In one class of optical parametric devices there is mixing of two optical input signals to generate two optical output signals whose frequencies are the sum and difference of the two input frequencies and whose amplitudes are related to the input amplitudes. In another class of optical parametric devices, one input beam is converted to one output beam whose frequency is twice that of the input beam. Further, the novel devices can be integrated with electronic devices on a semiconductor chip or laser or other solid state device to form a monolithic optical or electrooptical semiconductor device. Examples of such devices are described below.

Referring to FIG. 1 there is shown an elevational partially cross-sectional representation of an electrooptical directional coupler or switch 1. In accordance with FIG. 1, the coupler 1 comprises a substrate 2, e.g., glass, quartz or Si, a pair of spaced channel waveguides 3 and 4 on one surface of the substrate 2 and a pair of electrodes 5 and 6, one electrode associated with and contiguous to each channel waveguides 3 and 4, respectively. There is a central region 7 and 8 of each channel waveguide 3 and 4, respectively, where they are parallel to each other and where the spacing between waveguides is smallest. Typical spacing in this region is from 5μm to 20μm. Further, the electrodes 5 and 6 are positioned adjacent to the waveguide in this narrowly spaced region so as to maximize the electric field developed across the waveguides upon application of a voltage of the electrodes. Alternatively, as shown by the dotted lines, one may employ a single top electrode over the waveguides and a bottom electrode below the waveguides to enhance the field for a given applied voltage. In addition, the device may contain a protective polymer overcoat 7, e.g., a clear epoxy or acrylate polymer, to protect the waveguides 3 and 4. The electrooptic waveguides 3 and 4 which are about 2 μm thick are comprised of an optical quality glassy polymer host having doped therein a directionally ordered array of non-centrosymmetric organic molecules which exhibit second order optical susceptability in response to an applied field.

In operation of the device, light, preferably from a monochromatic single mode source, e.g., a laser, is inputted into one area of the upper channel waveguide 3, e.g., as designated by $S_1$. In the absence of any applied field, the electromagnetic field extends beyond the confines of the waveguide 3 a distance which is greater than the gap distance between the parallel portions of the upper and lower waveguides and penetrates the lower waveguide 4 and is propagated therethrough as well. If the length of the parallel portions of the waveguide are selected such that an antinode exists at the point of the lower waveguide 4 where the waveguides 3 and 4 start to deviate, the light (electromagnetic waves) will essentially be emitted from the lower waveguides at $S_2$. This is the crossover or switched configuration.

Upon applying of an appropriate voltage by means of the electrodes across the parallel waveguides, the electrooptical effect produced thereby causes the light to be transmitted directly in the upper waveguide and exit as shown by $S_3$. The voltage causing the maximum straight-through transmission is given by

$$U = \frac{\sqrt{3}d\lambda}{2\alpha n^3 r L}$$

where U is the applied voltage, λ is the wavelength, n the index of refraction of the waveguide, r the electrooptic coefficient of the waveguide, d the waveguide separation distance, L the length of the narrowly spaced parallel portions, and α the overlap integral between applied electric field and the optical field in the waveguide.

FIG. 2 shows an integrated laser tuner and frequency stabilizer using the electrooptic medium described herein. Here, a junction or injection laser 20 is grown on a semiconductor substrate 21, e.g., a GaAs laser on a GaAs substrate. A 1-3μm thick electrooptic film 22 lies adjacent and contiguous with the laser junction 23 to provide a waveguide for the light emitted at the junction 23. The film 22 is provided with

opposing electrodes 24 and 25, on one surface thereof, as shown, or on opposite surfaces, i.e., one electrode 24a between the film and the substrate and one electrode 25a on the top surface of the film so as to provide means for applying an electric field within the electrooptical film 22. Alternatively, electrode 25a can be a highly doped portion of the substrate 21. The electrooptic effect of the film under an applied field results in a tunable filter or frequency stabilizer for the laser output.

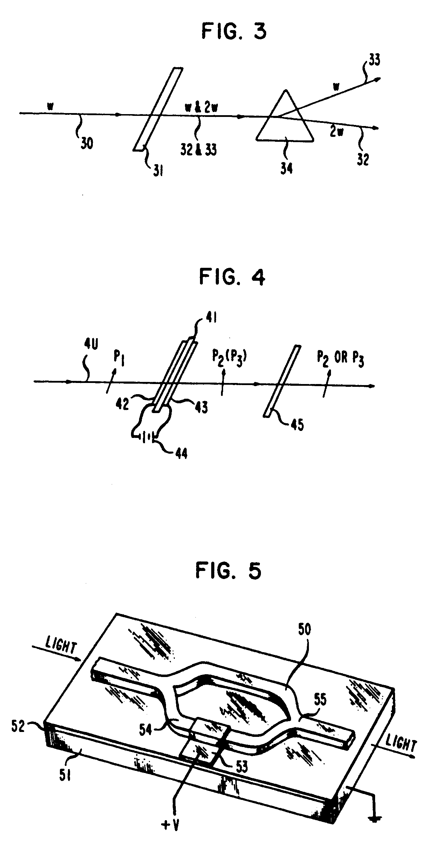

FIG. 3 shows the optically onlinear medium used in an optical parametric device for second harmonic frequency generation. Here, an incident light beam 30 at frequency $\omega$ impinges upon the optically nonlinear film 31. Due to the nonlinear optical properties of the film 31, two colinear beams 32 and 33 are emitted, one at the same frequency, $\omega$, and one at twice the frequency, $2\omega$. The emerging colinear beams 32 and 33 are passed through a prism 34 to spatially separate the two wavelengths 32 and 33. The beam 32 at $2\omega$ is now available to be used.

FIG. 4 shows the use of the electrooptic film in an electrooptic phase/intensity modulator. Here, incident light 40 having a polarization $P_1$ is passed through the electrooptic film 41 which is provided with transparent electrodes 42 and 43 on opposing surfaces of the film 41. Upon passing through the film, the natural bi-refringence of the film causes a change of polarization of the light to $P_2$. When a voltage is applied to the film by means of a voltage source 44 applied across the electrodes 42 and 43, an electric field is generated within the film 41. Through the linear electrooptical property of the film 41, the electric field causes a change in the film's index of refraction, thereby altering the bi-refringence. This, in turn causes the emitted light to have yet a different polarization, designated as $P_3$. Thus, a polarization modulation between the values $P_2$ and $P_3$ can be achieved by the periodic applications and/or removal of the voltage to the film 41. An intensity modulation can be achieved by placing a polarizer 45 at the output beam which is oriented to allow the passage of either $P_2$ or $P_3$, but not both. It should be noted that the nonlinear optical film of the devices of FIGS. 4 and 5, in practice, are preferably deposited on a substrate.

FIG. 5 shows a guided wave electrooptic intensity modulator employing an electrooptic material as described herein. Here, a film 50 of the electrooptic material is formed on a conductive substrate 51 having an insulative coating 52. The film 50 has a Mach-Zehnder two-arm interferrometric waveguide structure. A top electrode 53 is placed on one arm 54 of the interferromitric waveguide structure. The substrate is kept at ground potential. As voltage is applied to and removed from across the arm 54 by means of top electrode 53 and conducting substrate 51, an electric field is produced in the arm 54 of the interferrometer. This field changes the index of refration of the material due to the linear electrooptic effect possessed by the film 50. This results in an effective change in optical path length in arm 54 of the interferrometer relative to the other arm which, in turn, produces either constructive or destructive interference of the light at the recombination point 55. As the voltage is modulated so as to alternate between constructive and destructive conditions, the output intensity exhibits a maximum and minimum value, respectively.

The second order nonlinear optical medium useful for the above mentioned and other electrooptic and optical parametric devices comprises an optically clear glassy polymer having a no-centrosymmetric organic molecule which exhibits a non-zero second order optical susceptability in a ordered (directionally aligned) arrangement within said polymer. Since the magnitude of the effect is a linear function of the concentration of the organic molecule in the polymer, it is advantageous to utilize a system where the organic molecule is highly soluble within the glassy polymer host.

While many polymers may be suitable hosts, e.g., polymers of acrylates, methacrylates, clear epoxies, styrene and polycarbonate, we have found thus far that polymethylmethacrylate is generally preferred as the polymeric host material for the classes of nonlinear organic molecules investigated.

Examples of suitable non-centrosymmetric organic molecules which are dissolved in the polymer are represented by the formulas:

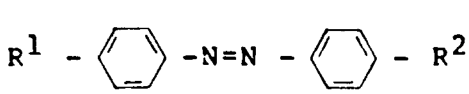 or 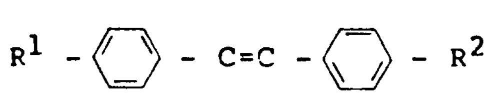

where $R^1$ is a strong electron withdraing group as known in the art, e.g.,

$NO_2$,

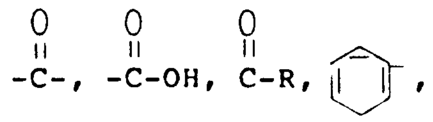

and $SO_2$ R
and $R^2$ is an electron donating or netural group, e.g.,

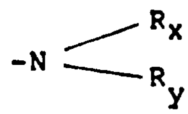

where $R_x$ and/or $R_y$ are H or an alkyl group or derivative thereof such as $-C_2H_5$, $-C_2H_4OH$, $C_3H_7$, etc. There may also be ring substitutions of the compounds. It should be understood that these compounds are merely representative of suitable non-centrosymmetric organic compounds useful in the practice of the invention and are not limiting. In practice, one should incorporate the maximum amount of active nonlinear optic compound as can be dissolved in the glassy polymer matrix in order to maximize the bulk second order nonlinear optical effect. Hence, the particular polymer most suitable with any specific nonlinear optical compound may depend upon the solubility of the compound in the polymer which can easily be determined.

A particularly suitable system appears to be the azo dye, disperse red 1 ($R_1$ is $NO_2$ and $R_2$ is

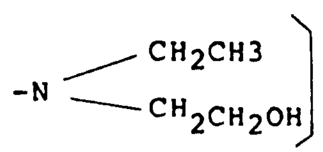

dissolved in polymethylmethacrylate (PMMA) to a concentration of up to 18 weight percent. Other compounds which are expected to give similar results in PMMA or other acrylate based polymers, e.g., polyethylacrylate, polymethylacrylate and polyethylmethacrylate are those where $R_1$ is $-NO_2$ and $R_2$ is either $NH_2$ or $NR^3_2$ where $R^3$ are alkyl groups such as $CH_3$, $C_2H_5$, $C_3H_7$ or the like or one such alkyl group and a hydrogen atom. The azo dyes such as disperse orange 3 have also been found to be suitable in an epoxy host.

In all cases, the active non-centrosymmetric organic material must be directionally oriented in the polymer matrix. This orientation is accomplished by poling the molecules in the polymer under the influence of an electric field under conditions where the polymer is fluid (e.g., above its glass transistion temperature or mixed with a solvent therefor). The field is retained until the polymer film hardens by reducing the temperature or evaporating the solvent. Upon hardening, the oriented active molecules remain in their ordered position in the polymer. Unoriented films do not exhibit the second order nonlinear optical properties of the oriented films due to the cancellation of the microscopic molecular effects on a macroscopic level caused by random orientation of the molecules. It should also be possible to achieve an ordered film under an electric field applied across the active molecule dissolved in a liquid monomer which is spread on a substrate to form a film and polymerized in situ.

An example of the preparation of a suitable nonlinear optical film is as follows. The polymer, e.g., PMMA, is dissolved in a suitable solvent and filtered through a sub-micron sized filter. Suitable solvents for PMMA are chloroform, DMSO, methylene chloride, chlorobenzene, acetone, ethyl or methyl cellosolve and cellosolve acetate. The optically nonlinear material is dissolved in the polymer-solvent solution. For the dye, disperse red 1, the concentration of the dye in the polymer is preferably about 18%. The substrate upon which the optically nonlinear film is to be prepared is thoroughly cleaned, preferably in a dust free atmosphere. Typical substrates are glass, quartz, aluminum, silicon wafer, thermal oxide coated silicon wafers and conductive indium-tin oxide-coated glass. A suitable substrate cleaning procedure employs an immersion in a heated solution comprising $H_2O$, $NH_4OH$ and $H_2O_2$ in a volume ratio of 10:2.5:2 followed by

a rinse with conductivity grade water and drying in an inert atmosphere.

The substrate is then coated with the solution of the nonlinear optical material in the polymer such as by means of spin coating a 1μm thick film on the substrate and removing the solvent by baking. Thicker films, e.g., up to 5μm are preferably prepared by multiple coatings followed by baking after each coating. For films in the 25μm to 200μm thick range multiple coatings of about 25μm per coating may be achieved by spray coating or doctor blading. It may be noted that by techniques well known in the art, high quality photoresist patterns can be applied to unmetallized films to form films having feature sizes of for example 4-50μm, which may be useful in some of the novel devices previously described. In order to pole or orient the active optically nonlinear molecules in the deposited film, it is preferred that the substrate have provided a conductor on the surface on which the optically nonlinear film or a buffer layer beneath the film is to be deposited. This can be a transparent tin oxide, indium oxide or indium tin-oxide conductor or a transparent or non-transparent metallic conductor deposited for example by sputtering. A top conductor is formed over the deposited film such as by sputtering a thin (100-1000 A.) gold layer on the deposited film.

The film sandwiched between electrodes is then raised about 5°C-40°C above the glass-rubber transition temperature of the polymer by slow heating. For example, the preferred azo dye in PMMA is heated at a rate of 5-15°C/minute to a temperature of from 115°-130°C. After heating, a poling voltage which aligns the optically nonlinear molecules in the polymer, is applied across the film and maintained for from 1-10 minutes. The voltage applied depends upon the film thickness. A voltage which creates a field of at least about $1 \times 10^5$ V/cm is desirable. Subsequently, the film is slowly cooled at a rate of about 10°C/minute and annealed for 5-15 minutes at a temperature just below the glass transition temperature ( 90°C for the azo dye in PMMA). After annealing it is slowly cooled to room temperature at about 15°C/minute and the poling voltage is removed. The slow heating, cooling, and annealing is to prevent defects from arising, minimizing or eliminating strain and minimizing free volume in the film. The top electrode layer may then be removed by abrasion or other means or it may be left on. Also the film may be patterned as previously mentioned by standard photoresist - etch techniques.

For use in a second harmonic generator, the film is typically applied to a transparent indium tin oxide conductor on a glass substrate and the top electrode is a transparent sputtered gold electrode. For use in a directional coupler, the film is typically deposited on a thermal oxide coated silicon wafer and its top surface is metallized by sputtering 2000-3000A. of Al on the film.

## Claims

**1.** A nonlinear optical element comprising:
- an optically clear polymer host; and
- organic dopant molecules having a nonzero second order optical susceptibility, being incorporated and directionally aligned in said polymer host;

characterized in that said polymer host is a glassy polymer.

**2.** The optical element recited in claim 1,
wherein said element is a film of said polymer.

**3.** The optical element recited in claim 2,
wherein said film is adherent upon an optically clear substrate.

**4.** The optical element recited in claim 3,
wherein the film is from 1 μm to 200 μm in thickness.

**5.** The optical element recited in anyone of claims 1 to 4,
wherein the organic compound is dissolved in said polymer to about the limit of its solubility therein.

**6.** The optical element recited in anyone of claims 1 to 5,
wherein the organic compound is represented by the formula

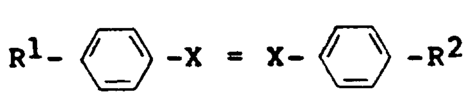

wherein X represents an atom selected from nitrogen and carbon, $R^1$ is a strong electron withdrawing group and $R^2$ is an electron donating or neutral group.

**7.** The optical element recited in claim 6,
wherein $R^1$ is selected from a member of the group consisting of

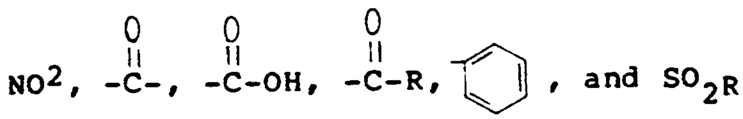

where R is an organic radical and $R^2$ is

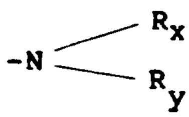

wherein $R_x$ and/or $R_y$ is selected from a member of the group consisting of hydrogen and an alkyl group.

**8.** The optical element recited in claim 6,
wherein the polymer is selected from a member of the group consisting of polymethacrylates, polyacrylates, epoxy, polystyrene and polycarbonate.

**9.** The optical element recited in anyone of claims 1 to 8,
wherein the organic molecule is disperse red 1 azo dye and the polymer is polymethylmethacrylate.

**10.** The optical element recited in claim 2,
including means for applying a voltage across said film for altering an optical property thereof.

**11.** The optical element recited in claim 10,
wherein said voltage means comprises at least one pair of spaced electrodes, at least one of said electrodes being on a surface of said film.

**12.** An optical device comprising the optical element recited in anyone of claims 1 to 11 and means for providing an optical input to and an optical output from said element.

**13.** An electrooptical directional coupler or switch comprising the optical element recited in claim 10, and consisting of a film on a substrate, said film being present on said substrate in the form of two separated arms having a closely spaced, parallel central region from which the arms diverge on each side of said region, the spacing between arms and arm lengths of said central region being such that light of a given wavelength passing through one arm can be coupled to the other arm and emitted therefrom in the absence of an applied field and such emission from said other arm can be reduced or eliminated upon the application of an electric field to said arms and including means for providing an optical input to one of said arms and means for detecting an optical output.

**14.** The device recited in claim 13
wherein the means for applying an electric field comprises spaced electrodes said electrodes being in the same plane as and adjcent each of said arms in the central region thereof.

**15.** The device recited in claim 13,
wherein the means for applying an electric field comprises at least one spaced electrode pair consisting of an electrode below and an electrode over said film in the central region thereof.

**16.** An integrated injection laser tuner and frequency stabilizer comprises a p-n junction laser grown on a semiconductor substrate, an optical waveguide on said substrate contiguous with and extending from the laser junction, said waveguide comprising the optical element recited in claim 10 and consisting of a film having the organic compound in the shape of a non-central symmetric molecule, and means for applying an electric field to said waveguide film for tuning or stabilizing the output of said laser.

**17.** A second harmonic generator comprising means for passing light of one frequency through the optical element recited in anyone of claims 1 to 11,
so as to produce a coincidental wave of a second frequency which is twice the original frequency and means for splitting the coincidental waves to allow one to extract said second frequency wave independent of the original frequency.

**18.** The device recited in claim 17,
wherein the means for splitting the coincidental beams is a prism.

**19.** An electrooptical phase modulator
comprising means for passing light of a first phase through an optical element recited in anyone of claims 1 to 11, means for applying an electric field to said element sufficient to cause a phase change in the incident light passing therethrough to create light of second phase.

**20.** The modulator recited in claim 19,
including a polarizer situated in the light path after said electrooptic element whcih allows light of either said first phase or said second phase, but not both, to pass therethrough.

**21.** An electrooptic amplitude modulator
comprising an interferometric waveguide including the optical element recited in anyone of claims 1 to 11 and means for applying an electric field to an arm of said waveguide to change the index of refraction of said arm, means for providing an optical input to said waveguide and means for detecting an optical output from said waveguide, the intensity of said output being dependent upon the field applied to said arm of said waveguide.

**22.** The modulator recited in claim 21,
wherein said interferometer is of the Mach-Zehnder type and wherein the waveguide is a thin film deposited on a conductive substrate having an insulating layer between said waveguide film and said conductive substrate and one arm of said film having an electrode thereover such that a voltage can be applied between the substrate and said electrode.

**Patentansprüche**

**1.** Nichtlineares optisches Bauelement mit
- einem optisch klaren Polymere-Wirtsmaterial, und
- organischen Dotierstoffmolekülen, die eine von Null verschiedene optische Suszeptibilität zweiter Ordnung aufweisen und in das Polymere-Wirtsmaterial eingebaut und richtungsmäßig ausgerichtet sind,

dadurch gekennzeichnet, daß
das Polymere-Wirtsmaterial ein glasiges Polymere ist.

**2.** Optisches Bauelement nach Anspruch 1,
wobei das Bauelement als ein Film aus dem Polymeren vorliegt.

**3.** Optisches Bauelement nach Anspruch 2,
bei dem der Film auf einem optisch klaren Substrat haftet.

**4.** Optisches Bauelement nach Anspruch 3,
bei dem der Film 1 bis 200 μm dick ist.

**5.** Optisches Bauelement nach einem der Ansprüche 1 bis 4,
bei dem

die organische Verbindung in dem Polymeren bis etwa zu seiner Löslichkeitsgrenze darin aufgelöst ist.

**6.** Optisches Bauelement nach einem der Ansprüche 1 bis 5, bei dem die organische Verbindung durch die Formel

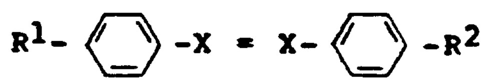

dargestellt ist, worin bedeuten
X ein von Stickstoff und Kohlenstoff ausgewähltes Atom,
$R^1$ eine stark Elektronen einfangende Gruppe und
$R^2$ eine Elektronen abgebende oder neutrale Gruppe.

**7.** Optisches Bauelement nach Anspruch 6, bei dem $R^1$ aus einem Mitglied der Gruppe, bestehend aus

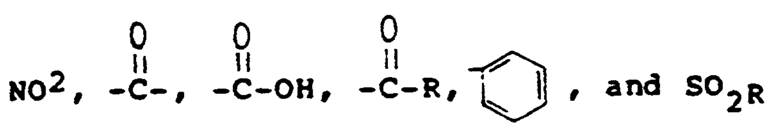

ausgewählt ist, worin bedeuten
R einen organischen Rest und
$R^2$ einen organischen Rest der Formel

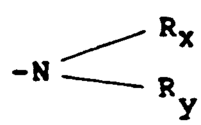

in dem wiederum
$R_x$ und/oder $R_y$ aus einem Mitglied der aus Wasserstoff und einer Alkylgruppe bestehenden Gruppe ausgewählt sind.

**8.** Optisches Bauelement nach Anspruch 6, bei dem das Polymere aus einem Mitglied der aus Polymethacrylaten, Polyacrylaten, Epoxy, Polystyrol und Polycarbonat bestehenden Gruppe ausgewählt ist.

**9.** Optisches Bauelement nach einem der Ansprüche 1 bis 8, bei dem das organische Molekül ein disperser Red-1-Azo-Farbstoff ist und das Polymere Polymethylacrylat ist.

**10.** Optisches Bauelement nach Anspruch 2, mit einer Einrichtung zum Anlegen einer Spannung über den Film zur Änderung einer optischen Eigenschaft desselben.

**11.** Optisches Bauelement nach Anspruch 10, bei dem die Spannungseinrichtung wenigstens ein Paar im Abstand gelegener Elektroden aufweist, von denen wenigstens eine auf einer Fläche des Films angeordnet ist.

**12.** Optische Vorrichtung mit einem optischen Bauelement nach einem der Ansprüche 1 bis 11 und mit einer Einrichtung zum Vorsehen eines optischen Einganges und Ausganges in das beziehungsweise aus dem Bauelement.

**13.** Elektrooptischer Richtungskoppler oder Schalter mit einem optischen Bauelement nach Anspruch 10 und bestehend aus einem Film auf einem Substrat, wobei der Film auf dem Substrat in Form zweier getrennter Arme mit einem eng beabstandeten, parallelen Mittelbereich vorliegt, von dem aus die Arme auf beiden Seiten des Bereiches divergieren, wobei der Abstand zwischen Armen und die Armlängen des Mittelbereiches so gewählt sind, daß Licht einer gegebenen Wellenlänge, das durch einen Arm läuft, in den anderen Arm gekoppelt und hieraus bei Fehlen eines angelegten Feldes emittiert werden kann und eine solche Emission aus dem anderen Arm durch Anlegen eines elektrischen Feldes an die Arme reduziert oder eliminiert werden kann, und wobei eine Einrichtung zum Vorsehen eines optischen Einganges an den einen der Arme und eine Einrichtung zum Nachweisen eines optischen Ausganges vorhanden sind.

**14.** Vorrichtung nach Anspruch 13, bei der
die Einrichtung zum Anlegen eines elektrischen Feldes beabstandete Elektroden umfaßt, die in derselben Ebene wie und benachbart zu jedem der Arme in deren Mittelbereich angeordnet sind.

**15.** Vorrichtung nach Anspruch 13, bei der
die Einrichtung zum Zuführen eines elektrischen Feldes wenigstens ein beabstandetes Elektrodenpaar aufweist, das aus einer Elektrode unterhalb und einer Elektrode oberhalb des Films in dessen Mittelbereich besteht.

**16.** Integrierter Injektionslaser-Tuner und Frequenzstabilisierer, umfassend
- einen p-n-Übergangslaser, der auf einem Halbleitersubstrat aufgewachsen ist,
- einen auf dem Substrat angeordneten optischen Wellenleiter, der an den Laserübergang angrenzt und sich hiervon weg erstreckt, wobei der Wellenleiter ein optisches Bauelement nach Anspruch 10 umfaßt und aus einem Film besteht, der die organische Verbindung in Form eines nicht-zentralsymmetrischen Moleküls besitzt, und
- eine Einrichtung zum Zuführen eines elektrischen Feldes an den Wellenleiterfilm zur Abstimmung oder Stabilisierung des Ausganges des Lasers.

**17.** Generator für zweite Harmonische, umfassend
- Mittel zum Hindurchschicken von Licht einer ersten Frequenz durch ein optisches Bauelement nach einem der Ansprüche 1 bis 11, um eine koinzidente Welle einer zweiten Frequenz, die das zweifache der ursprünglichen Frequenz beträgt, zu erzeugen, und
- eine Einrichtung zum Teilen der koinzidenten Wellen, um eine Auskopplung der Welle der zweiten Frequenz unabhängig von der ursprünglichen Frequenz zu ermöglichen.

**18.** Vorrichtung nach Anspruch 17, bei der
die Einrichtung zum Teilen der koinzidenten Strahlung ein Prisma ist.

**19.** Elektrooptischer Phasenmodulator, umfassend
- eine Einrichtung zum Hindurchschicken von Licht einer ersten Phase durch ein optisches Bauelement nach einem der Ansprüche 1 bis 11,
- Mittel zum Anlegen eines ausreichenden elektrischen Feldes an das Bauelement, um eine Phasenänderung in dem durchgeschickten Einfallslicht zur Erzeugung von Licht einer zweiten Phase zu verursachen.

**20.** Modulator nach Anspruch 19, mit
einem im Lichtweg hinter dem elektrooptischen Element gelegenen Polarisator, der Licht entweder der ersten oder der zweiten Phase, nicht aber Licht beider Phasen hindurchläßt.

**21.** Elektrooptischer Amplitudenmodulator, mit
- einem interferometrischer Wellenleiter, der ein optisches Bauelement nach einem der Ansprüche 1 bis 11 enthält, und
- einer Einrichtung zum Anlegen eines elektrischen Feldes an einen Arm des Wellenleiters zur Änderung des Brechungsindex dieses Arms,
- einer Einrichtung zum Vorsehen eines optischen Einganges in den Wellenleiter und
- einer Einrichtung zum Nachweis eines optischen Ausganges aus dem Wellenleiter,

wobei die Intensität des Ausganges vom dem Arm des Wellenleiters zugeführten Feld abhängt.

**22.** Modulator nach Anspruch 21, bei dem
- das Interferometer vom Mach-Zehnder-Typ ist und
- der Wellenleiter ein auf ein leitendes Substrat unter Zwischenschaltung einer Isolierschicht niedergeschlagener Dünnfilm ist und ein Arm des Films eine darüberliegende Elektrode derart aufweist, daß eine Spannung zwischen Substrat und die Elektrode angelegt werden kann.

**Revendications**

**1.** Un élément optique non linéaire comprenant :
- un polymère hôte transparent au point de vue optique; et
- des molécules organiques de dopant ayant une susceptibilité optique du second ordre différente de zéro, qui sont incorporées et alignées de façon directionnelle dans le polymère hôte;

caractérisé en ce que le polymère hôte est un polymère vitreux.

**2.** L'élément optique selon la revendication 1, dans lequel l'élément consiste en une pellicule du polymère.

**3.** L'élément optique selon la revendication 2, dans lequel la pellicule adhère sur un substrat transparent au point de vue optique.

**4.** L'élément optique selon la revendication 3, dans lequel la pellicule a une épaisseur de 1 $\mu$m à 200 $\mu$m.

**5.** L'élément optique selon l'une quelconque des revendications 1 à 4,
dans lequel le composé organique est dissous dans le polymère approximativement jusqu'à la limite de sa solubilité dans celui-ci.

**6.** L'élément optique selon l'une quelconque des revendications 1 à 5,
dans lequel le composé organique est représenté par la formule :

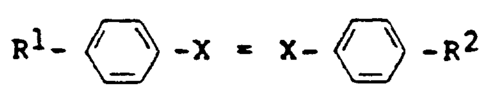

dans laquelle X représente un atome sélectionné parmi l'azote et le carbone, $R^1$ est un groupe fortement accepteur d'électrons et $R^2$ est un groupe neutre ou donneur d'électrons.

**7.** L'élément optique selon la revendication 6, dans lequel $R^1$ est sélectionné parmi les membres du groupe comprenant

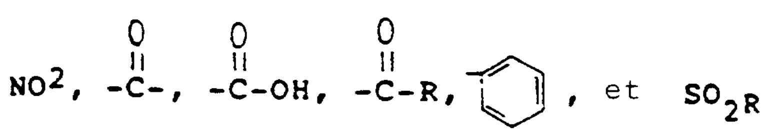

en désignant par R un radical organique, et $R^2$ est donné par la formule :

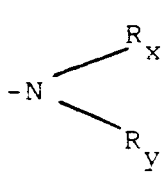

dans laquelle $R_x$ et/ou $R_y$ sont sélectionnés parmi les membres du groupe qui comprend l'hydrogène et un groupe alkyle.

8. L'élément optique selon la revendication 6, dans lequel le polymère est sélectionné parmi les membres du groupe comprenant les substances suivantes : polyméthacrylates, polyacrylates, époxy, polystyrène et polycarbonate.

9. L'élément optique selon l'une quelconque des revendications 1 à 8,
dans lequel la molécule organique est constituée par le colorant azoîque appelé rouge 1 dispersé, et le polymère est le poly(méthacrylate de méthyle).

10. L'élément optique selon la revendication 2, comprenant des moyens pour appliquer une tension de part et d'autre de la pellicule, afin de modifier une propriété électrique de celle-ci.

11. L'élément optique selon la revendication 10, dans lequel les moyens d'application de tension comprennent au moins une paire d'électrodes espacées, l'une au moins de ces électrodes se trouvant sur une surface de la pellicule.

12. Un dispositif optique comprenant l'élément optique selon l'une quelconque des revendications 1 à 11, et des moyens pour appliquer un signal d'entrée optique à l'élément et pour obtenir un signal de sortie optique à partir de l'élément.

13. Un coupleur directionnel ou un commutateur électro-optique comprenant l'élément optique selon la revendication 10, et consistant en une pellicule sur un substrat, cette pellicule étant présente sur le substrat sous la forme de deux branches séparées ayant une région centrale dans laquelle les branches sont parallèles et très rapprochées, les branches divergeant à partir de chaque côté de cette région, l'écartement entre les branches et les longueurs des branches de la région centrale étant tels que la lumière d'une longueur d'onde donnée qui traverse une branche peut être couplée vers l'autre branche et émise à partir de celle-ci, en l'absence d'un champ appliqué, et cette émission à partir de l'autre branche pouvant être réduite ou élimnée sous l'effet de l'application d'un champ électrique aux branches, et comprenant des moyens pour appliquer un signal d'entrée optique à l'une des branches et des moyens pour détecter un signal de sortie optique.

14. Le dispositif selon la revendication 13 dans lequel les moyens d'application d'un champ électrique comprennent des électrodes espacées, ces électrodes se trouvant dans le même plan que chacune des branches et étant adjacentes aux branches dans leur région centrale.

15. Le dispositif selon la revendication 13, dans lequel les moyens d'application d'un champ électrique comprennent au moins une paire d'électrodes espacées, consistant en une électrode au-dessus de la pellicule et une électrode au-dessous de la pellicule, dans la région centrale de celle-ci.

16. Un dispositif d'accord/stabilisateur de fréquence pour laser à injection intégré, comprenant un laser à jonction p-n formé par croissance sur un substrat semiconducteur, un guide d'ondes optique sur le substrat, contigu à la jonction du laser et s'étendant à partir de celle-ci, ce guide d'ondes comprenant l'élément optique selon la revendication 10, et consistant en une pellicule qui contient le composé organique ayant la forme d'une molécule ne présentant pas de symétrie centrale, et des moyens pour appliquer un champ électrique à la pellicule de guide d'ondes, pour accorder ou stabiliser l'émission du laser.

17. Un générateur de second harmonique comprenant :
des moyens pour faire passer de la lumière d'une fréquence à travers l'élément optique selon l'une quelconque des revendications 1 à 11, de façon à produire une onde en coïncidence d'une seconde fréquence, qui est égale au double de la fréquence d'origine, et des moyens pour séparer les ondes en coïncidence, afin de permettre d'extraire l'onde à la seconde fréquence indépendamment de la fréquence d'origine.

18. Le dispositif selon la revendication 17, dans lequel les moyens de séparation des faisceaux en coïncidence consistent en un prisme.

19. Un modulateur de phase électro-optique comprenant des moyens pour faire passer de la lumière d'une première phase à travers un élément optique selon l'une quelconque des revendications 1 à 11, et des

moyens pour appliquer à l'élément un champ électrique suffisant pour provoquer un changement de phase dans la lumière incidente qui traverse l'élément, afin de produire de la lumière d'une seconde phase.

**20.** Le modulateur selon la revendication 19, comprenant un polariseur situé dans le chemin de la lumière après l'élément électro-optique, qui se laisse traverser par de la lumière ayant la première phase ou la seconde phase, mais non les deux.

**21.** Un modulateur d'amplitude électro-optique comportant un guide d'ondes interférométrique comprenant l'élément optique selon l'une quelconque des revendications 1 à 11, et des moyens pour appliquer un champ électrique à une branche de ce guide d'ondes, afin de changer l'indice de réfraction de cette branche, des moyens pour appliquer un signal d'entrée optique au guide d'ondes et des moyens pour détecter un signal de sortie optique du guide d'ondes, l'intensité de ce signal de sortie dépendant du champ qui est appliqué à la branche précitée du guide d'ondes.

**22.** Le modulateur selon la revendication 21, dans lequel l'interféromètre est du type Mach-Zehnder et dans lequel le guide d'ondes est une pellicule mince déposée sur un substrat conducteur, une couche isolante est intercalée entre la pellicule de guide d'ondes et le substrat conducteur, et une électrode est formée sur une branche de la pellicule, de façon qu'une tension puisse être appliquée entre le substrat et cette électrode.

FIG. 1

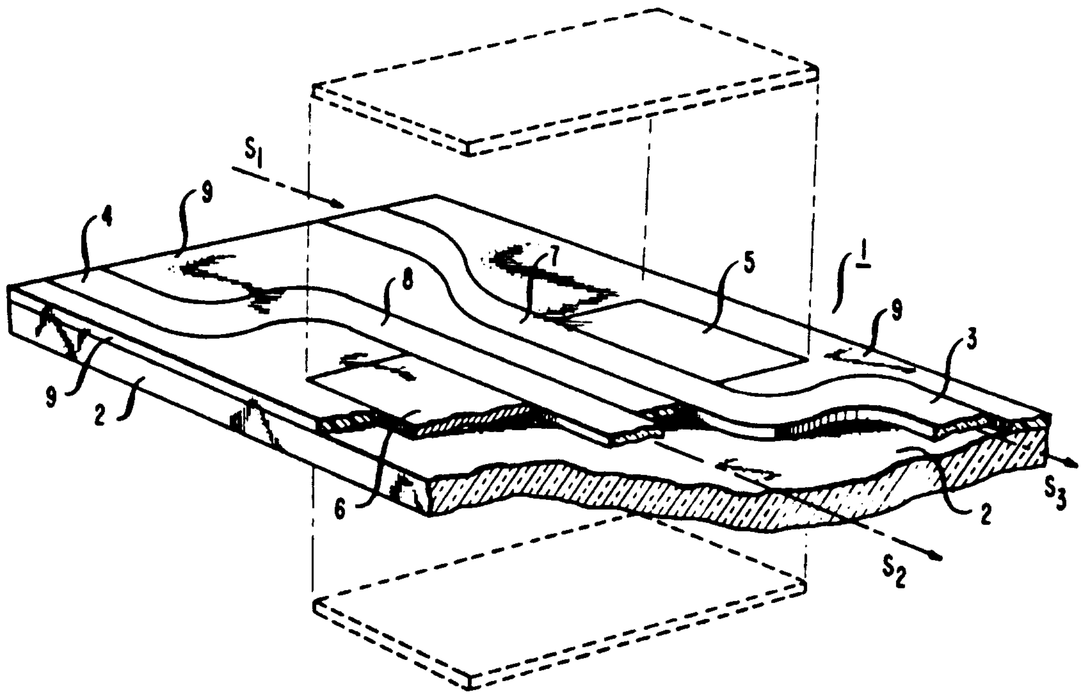


FIG. 2

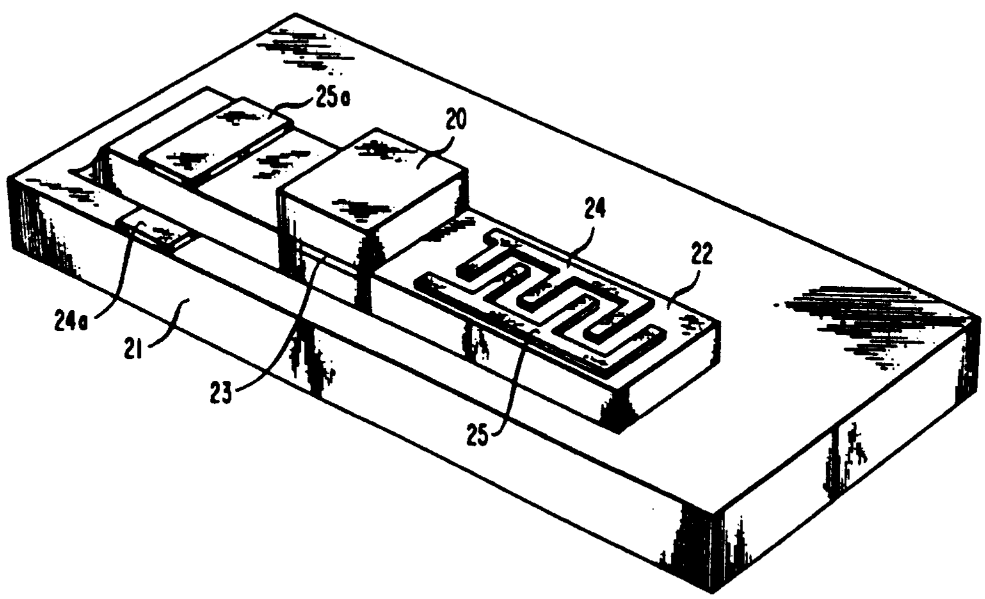

FIG. 3

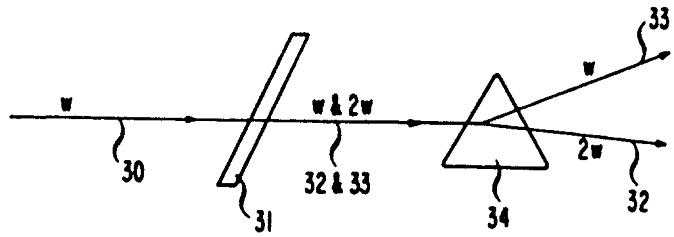


FIG. 4

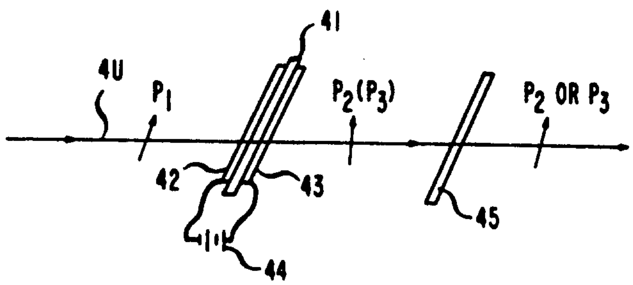


FIG. 5